# EUROPEAN PATENT SPECIFICATION

(11) **EP 0 931 249 B1**
(45) Date of publication and mention of the grant of the patent: **17.09.2003**
(21) Application number: 97942824.0
(22) Date of filing: 08.10.1997
(51) Int. Cl.: G01K 17/02, G01K 17/06

(54) **A TUBE FOR MEASURING HEAT CONSUMPTION**
EIN ROHR ZUM MESSEN DES WAERMEVERBRAUCHS
TUBE DE MESURE DE LA CONSOMMATION DE CHALEUR

(30) Priority: 08.10.1996 DK 110796
(43) Date of publication of application: 28.07.1999
(73) Proprietor: Brunata Holding A/S, 2400 Copenhagen NV (DK)
(72) Inventor: FISCHER HANSEN, Jens, Peter, DK-2960 Rungsted Kyst (DK)
(74) Representative: Wittrup, Flemming
(86) International application number: DK9700432
(87) International publication number: WO98015806

(56) References cited:
- DK-A- 35 701
- DK-A- 36 321
- DK-A- 41 024
- DK-B- 156 331
- NO-C- 69 537

## Description

The invention relates to a tube for measuring heat consumption comprising a tubular member that is closed at a first extremity and open at a second extremity, and wherein an evaporative liquid filling is present in said tubular body, said liquid being withheld in the tubular body by a capillary effect and wherein the lumen in the liquid-filled region of the tubular body has a cross-sectional area which is smaller than the area of a circle having a diameter of 3.5 mm.

In devices for measuring heat consumption of the evaporation type, liquid-filled tubes are used to record consumption. The tube is transparent, and the liquid contained therein has such colouring that the liquid level can be perceived and read off a calibration scale on the device for measuring heat consumption in which the tube has been arranged.

DK 41024 discloses a tube for measuring heat consumption comprising a tubular body with a lumen that substantially exceeds the area of a circle having a diameter of 3.5 mm. The tube is, at its one end, provided with a mouth region with a smaller area than the tubular body itself. This constriction serves to limit the evaporation from the tube. DK 36321 and No 69537 disclose similar tubes, the mouth region according to DK 36321 being formed by a cork with a central aperture covered by a metal plate, the plate having a hole through which the fumes of the evaporating liquid may escape, and the mouth region according to NO 69537 being formed by the walls at the top being bent inwardly, so that the terminating edge of the inwardly bent part forms an opening through which the fumes may escape. Both prior art tubes have the problem that owing to the relatively large diameter of the tubular body, there is a risk that air may pass the liquid and enter the tube when the tube is arranged in a horizontal position, and a subsequent increase in temperature will cause an increase in the volume of this air and consequently liquid is pressed out of the tube. Following this partial or complete discharge, the tube is useless, since, if the tube was in use, the discharged liquid would be recorded as consumption.

A tube of the type described in the introductory part is known from DK patent No. 156,331. Tubes of this kind with a lumen where the area is smaller than the area of a circle having a diameter of 3.5 mm has the effect that the liquid is withheld in the tube by a capillary effect. The capillary effect is associated with a variety of substantial advantages in connection with such tubes. Examples include the option of positioning the tube in any position without the liquid flowing out of the tube, and without air flowing into the tube past the liquid filling. Furthermore, tubes of this type yield a far more accurate result, due to a small meniscus compared to tubes with a larger lumen area. In most cases such tubes can be stored and transported in bags with diffusion-proof coating irrespective of the orientation of the tubes.

However, it has been found that certain combinations of lumen areas and liquid types are less advantageous. The impact of rough handling of tubes with a lumen having a cross sectional area which is approximately equivalent with the upper area limit, viz. the area of a circle having a diameter of 3.5 mm, may cause certain types of liquid to leave through the tube opening. In this context, the liquids concerned are those having a relatively small surface tension. In order to ensure that such liquid does not, upon rough handling, e.g. by impacts, leave through the open end of the tube, it is necessary to configure the liquid-filled portion of the tube with a substantially smaller lumen area or optionally to mount a closure device, e.g. a plug, in connection with the mouth region. However, a smaller lumen area is associated with a drawback in the form of poor readability caused by the poor thickness of the liquid column with its usual colouring. In case of a more intensive colouring of the liquid, the colour contained in the liquid will deposit on the tubular wall and thus add to the obstruction of the reading.

Mounting of a closure device is a further manufacturing process that aggravates the production procedure and increases the costs thereof. The required removal of a closure device prior to mounting of the tubes involves a more time-consuming and difficult working routine for the fitters.

Moreover, there is a risk that a mounted closure device can be left on the tube thereby preventing evaporation and thus recording of consumption. Therefore, the arrangement of closure devices on tubes is undesirable.

It is thus the object of the present invention to provide a tube of the type described in the introductory part that allows the use of a wider range of liquids for filling thereof.

According to the invention this is obtained by providing the tubular body with a constriction of its lumen above the liquid filling.

By this measure it is possible to combine substantially more liquid types and cross sectional dimensions for the tube while maintaining adequate readability without the rough handling of the tubes that occur in connection with their manufacture and transport causing leakage from said tubes. Leakage-preventing measures, such as plugs, are hereby rendered superfluous by the tube according to the invention and transport in bags is still an option.

According to a preferred embodiment of the invention the area of the constricted portion of the lumen in the tubular body constitutes less than three quarters, preferably less than half of the lumen in the liquid-filled portion of the tubular body.

Above the constriction a tubular portion may conveniently be provided which has a cross sectional area that is smaller than the area of a circle having a diameter of 3.5 mm.

Preferably the extent of the constriction in the axial direction of the tubular body is less than 10 mm, preferably less than 6 mm. Hereby the constriction will have only a small or non-existing impact on the diffusion out through the mouth region.

Examples of a measurement liquid which is suitable in connection with the tube according to the invention include 1-hexanol. However, there will be numerous other alternatives available for use as measurement liquid, where said combinations of tube and liquid have not previously been possible.

In the following, preferred embodiments of the tube for measuring heat consumption according to the invention are described with reference to the drawings, wherein
- Figure 1: is a longitudinal sectional view of a first tube for measuring heat consumption,
- Figure 2: is a longitudinal sectional view of a second tube for measuring heat consumption
- Figure 3: is a sectional view of the tubes for measuring heat consumption shown in Figures 1 and 2.

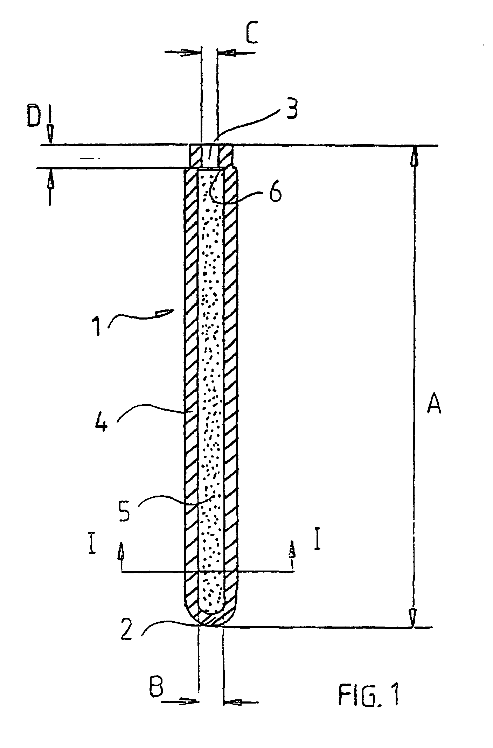

The sectional view shown in Figure 1 comprises a tubular body 1 closed at the one end 2 and having at its opposite end an opening 3. From the closed end 2 and until shortly before the mouth region at the opening 3, the tubular body 4 has an approximate cross sectional shape with an internal diameter D. Shortly before the mouth region a constriction is provided in connection with which a downwardly oriented edge 6 is provided. The constricted area around the mouth region at the opening 3 has an internal diameter C. The area with the constriction extends in the axial orientation of the tube over a distance D. The tube has a total length A.

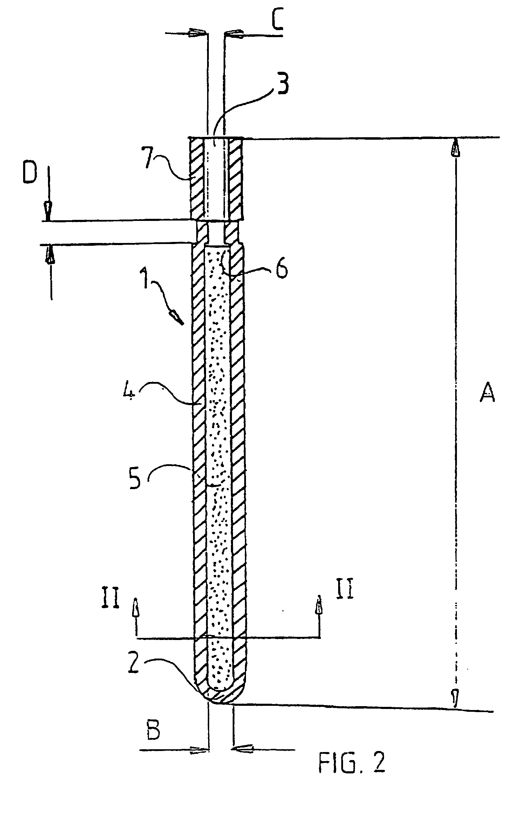

The tube for measuring heat consumption shown in a longitudinal sectional view in Figure 2 comprises constructive elements corresponding to the elements described in connection with the tube shown in Figure 1. Moreover the space above the constriction has a tubular region 7 having a lumen dimensioned in accordance with the same criteria as the lumen below the constriction.

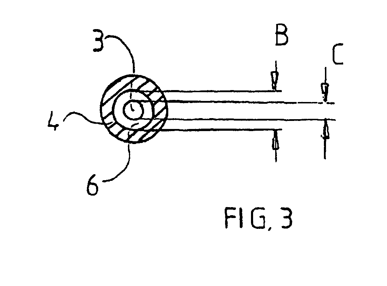

Figure 3 clearly illustrates the circular cross sectional profile of the tube, and also the diameters of the liquid-filled area 5 and the constricted region at the mouth region 3 are subject to more detailed description therein.

In Figures 1 and 2, the liquid filling is shown as a dotted area.

The liquid-filled area has a sufficiently large diameter to allow the liquid level for a liquid with usual colouring to be clearly read on a calibration scale in a housing intended therefor, wherein one or more tubes are arranged. The constriction makes it possible to use measuring liquids in cases where a previously known tube would involve a high risk of waste during use, e.g. in case of impacts, due to the small capillary constant of these liquids.

Such tubes are filled with liquid in a vacuum process described in detail in DK patent Nos 116,969 and 156,331. In this connection the construction shown in Figure 2 is advantageous in that it is desirable to fill the tube to a level immediately below the constriction and in that the magnitude of the required vacuum is desirably moderate. It is hereby possible to fill the tube to a distance above the constriction where the liquid volume above the constriction corresponds to the air-filled volume at the bottom of the tube and the volume in the constriction area, and subsequently by centrifuging force the liquid towards the bottom of the tube.

## Claims

1. A tube for measuring heat consumption comprising a tubular body (1) that is closed at a first end (2) and open at a second end (3), wherein an evaporative liquid filling is present in the tubular body, said liquid being withheld in the tubular body by a capillary effect and wherein the lumen in the liquid-filled area of the tubular body has a cross sectional area that is smaller than the area of a circle having a diameter of 3.5 mm, **characterized in that** above the liquid filling in the tubular body, a constriction of said lumen is provided.

2. A tube for measuring heat consumption according to claim 1, **characterized in that** the area of the constricted portion in the tubular body constitutes less than three quarters, preferably less than half of the lumen in the liquid-filled portion of the tubular body.

3. A tube for measuring heat consumption according to claim 1 or 2, **characterized in that** above the constriction, a tubular element is provided which has a cross sectional area that is smaller than the area of a circle having a diameter of 3.5 mm.

4. A tube for measuring heat consumption according to claim 1-3, **characterized in that** the extent of the constriction in the axial direction of the tubular body is less than 10 mm, preferably less than 6 mm.

5. A tube for measuring heat consumption according to claims 1-4, **characterized in that** the evaporative liquid filling is 1-hexanol.

## Patentansprüche

1. Rohr zum Messen des Wärmeverbrauchs, das einen rohrförmigen Körper (1) aufweist, der an einem ersten Ende (2) geschlossen und an einem zweiten Ende (3) offen ist, wobei eine Verdampfungsflüssigkeitsbefüllung im rohrförmigen Körper vorhanden ist, die Flüssigkeit im rohrförmigen Körper durch einen Kapillareffekt zurückgehalten wird und der Innendurchmesser im flüssigkeitsbefüllten Bereich des rohrförmigen Körpers eine Querschnittsfläche hat, die geringer ist als die Fläche eines Kreises mit einem Durchmesser von 3,5 mm, **dadurch gekennzeichnet, dass** oberhalb der Flüssigkeitsbefüllung im rohrförmigen Körper eine Verengung des Innendurchmessers vorgesehen ist.

2. Rohr zum Messen des Wärmeverbrauchs nach Anspruch 1, **dadurch gekennzeichnet, dass** die Fläche des verengten Bereichs des rohrförmigen Körpers weniger als drei Viertel, vorzugsweise weniger als die Hälfte des Innendurchmessers des flüssigkeitsbefüllten Abschnittes des rohrförmigen Körpers beträgt.

3. Rohr zum Messen des Wärmeverbrauchs nach Anspruch 1 oder 2, **dadurch gekennzeichnet, dass** oberhalb der Verengung ein rohrförmiges Element vorgesehen ist, dessen Querschnittsfläche geringer ist als die Fläche eines Kreises mit einem Durchmesser von 3,5 mm.

4. Rohr zum Messen des Wärmeverbrauchs nach Anspruch 1 bis 3, **dadurch gekennzeichnet, dass** das Ausmaß der Verengung in Axialrichtung des rohrförmigen Körpers weniger als 10 mm, vorzugsweise weniger als 6 mm beträgt.

5. Rohr zum Messen des Wärmeverbrauchs nach Anspruch 1 bis 4, **dadurch gekennzeichnet, dass** es sich bei der Verdampfungsflüssigkeitsbefüllung um 1-Hexanol handelt.

## Revendications

1. Tube pour mesurer la consommation de chaleur comprenant un corps tubulaire (1) qui est fermé à une première extrémité (2) et ouvert à une seconde extrémité (3), dans lequel un remplissage par liquide d'évaporation est présent dans le corps tubulaire, ledit liquide étant maintenu dans le corps tubulaire par un effet capillaire, et dans lequel le lumen de la zone remplie par le liquide du corps tubulaire comprend une section en coupe transversale qui est inférieure à la section d'un cercle présentant un diamètre de 3,5 mm, **caractérisé en ce qu'**un étranglement dudit lumen est prévu au-dessus du remplissage par liquide dans le corps tubulaire.

2. Tube pour mesurer la consommation de chaleur selon la revendication 1, **caractérisé en ce que** la section de la partie étranglée du corps tubulaire constitue moins des trois quarts, de préférence moins de la moitié du lumen, de la partie remplie par le liquide du corps tubulaire.

3. Tube pour mesurer la consommation de chaleur selon la revendication 1 ou 2, **caractérisé en ce qu'**un élément tubulaire est prévu au-dessus de l'étranglement, qui comprend une section en coupe transversale qui est inférieure à la section d'un cercle présentant un diamètre de 3,5 mm.

4. Tube pour mesurer la consommation de chaleur selon la revendication 1 à 3, **caractérisé en ce que** l'amplitude de l'étranglement dans la direction axiale du corps tubulaire est inférieure à 10 mm, de préférence inférieure à 6 mm.

5. Tube pour mesurer la consommation de chaleur selon la revendication 1 à 4, **caractérisé en ce que** le remplissage par liquide d'évaporation est du l-hexanol.
